# EUROPEAN PATENT APPLICATION

(11) **EP 2 014 162 A2**
(43) Date of publication of application: **14.01.2009**
(21) Application number: 08159892.2
(22) Date of filing: 08.07.2008
(51) Int. Cl.: A01M 29/00

(54) **Bird deterring device**

(30) Priority: 10.07.2007 IT FI20070153
(71) Applicant: O.E.S. Officine Elettromeccaniche Signesi S.r.L., 50058 Signa (Firenze) (IT)
(72) Inventor: Scarselli, Sergio, 50055, Lastra a Signa (Firenze) (IT)
(74) Representative: Bardini, Marco Luigi

(57) **Abstract**

A device for deterring birds from stopping on surfaces, comprising a board (11) with predominantly longitudinal extension to be fixed at a lower face (12) to a surface on which the stay of the birds need be prevented; and wire-shaped deterring elements (19) with two end segments (19b) pointing outward from the board. According to the invention the board (11) has locking seats (22) for elements (19) so that the end segments (19b) can project and point according to a direction substantially parallel to the lower face (12) of the board (11).

## Description

The present invention generally concerns the field of the devices for fighting the damaging presence of birds in urban areas, and in particular it refers to a device for deterring the birds from stopping on surfaces, such as for example cornices, railings, gutters, blinds etc.

Presently, different types of devices are available on the market for preventing the stopping of birds on the surfaces of buildings. Among these, one of the most common comprises a board that can be fixed, by means of glue or screws, to the surface to be protected. From one face of the board (opposite to the face contacting the surface), needle-like elements project upward, deterring the birds from perching thereon.

Regarding this type of devices, one advantageous variant provides that the needle-like elements consist in substantially U- or V-shaped metal wire-shaped elements which are linked with the board by insertion in corresponding locking seats. Such conformation permits a quicker and easier assembly of the needle-like elements to the boards. Examples of such devices are described for example in the patent applications EP0792099, W02005/029955, US 2004/0216393.

In certain circumstances, it is necessary to prevent the birds from perching on the upper edges of hinged frames of blinds, doors or windows. In these cases, devices such as those described above cannot be used, since when fixed to the top edge of the wing, they would hinder its closure.

According to a possible solution to this problem, the boards are fixed on the outer face of the hinged frame, close to the top edge. Therefore, the needle-like elements, typically made of metal, result arranged orthogonally to the external face of the frame, and can then be folded upward, thus acting as deterrents for the pigeons from resting on the top edge. It is clear that this solution is unsatisfactory, both with respect to the rapidity of installation, since all the needle-like elements must be bent, one by one, and from an aesthetic standpoint, since the orientation of the needle-like elements will be non-uniform, and moreover it is likely that a certain number of needle-like elements will continue to project perpendicularly from the external face of the frame.

A solution which overcomes such drawback is shown in the patent application EP1110451. In this document, a device is shown for deterring birds from stopping on the edges of hinged door or window frames. This device provides for a board to be fixed with one of its flat faces on the external face of the frame, near the top edge, and a plurality of needle-like elements inserted in corresponding locking seats defined on the outer face of the board, that is the face opposite to the one fixed to the frame. Such needle-like elements are shaped so as to exit from the outer face of the board and extend upward and towards the frame, at an angle in the range of 10° to 30° with respect to the vertical plane on which the frame lies.

Such solution provides for an installation which is surely much faster than that of the previously indicated solution, but on the other hand has the drawback of being exclusively dedicated to this type of application, since it cannot be conveniently used on wider surfaces, such as for example cornices.

Moreover, the described devices, due to their arrangement, are not suitable for completely preventing the nest-building inside the gutters when mounted on the edges thereof.

The object of the present invention is therefore to provide a device for deterring birds from stopping on surfaces of any type, from the cornice to the top edge of a hinged door or window frame to a gutter.

With reference to the previously mentioned object, another important object is that of providing a bird deterring device which can be quickly assembled for its installation.

Another important object of the present invention is to provide a device for deterring birds from stopping on surfaces of any type, which can be produced in a cost-effective manner.

These and other objects, which will be more clearly explained hereafter, are achieved with the bird deterring device according to the invention, whose essential characteristics are defined by the first of the attached claims.

The characteristics and advantages of the bird deterring device according to the present invention will be apparent from the following description of an embodiment thereof, to be considered as exemplifying and non-limiting with reference to the attached drawings, in which:
- figure 1 represents a top view of a board of the device according to the invention;
- figure 2 is a front sectional view of the board of figure 1, taken along lines II-II and with needle-like bird deterring elements applied thereon;
- figure 3 represents a side sectional view of the board with the deterring elements as in figure 3, taken along lines III-III;
- figure 4 is a top view of the board of figure 1 with deterring elements applied according to an orientation alternative with respect to the one shown in figures 2 and 3;
- figure 5 represents a side sectional view of the board of figure 1, taken along lines III-III, fixed with a flat face to a vertical wall and with deterring elements applied according to the orientations shown in the previous figures;
- figure 6 is a top view of a variant of the board shown in the previous figures, with deterring elements attached according to an orientation corresponding to that shown in figure 4;
- figure 7 represents a bottom view of the board of figure 6 with the same deterring elements attached;
- figure 8 is a front view of a board portion of figure 6, sectioned along lines VIII-VIII, with deterring elements attached according to the two orientations shown in figures 2, 3 and 5; and
- figure 9 represents a side view of the board of figure 6, sectioned along lines IX-IX, fixed with a flat face to a horizontal surface at the edge of a gutter and with deterring elements attached according to the orientations shown in figure 8.

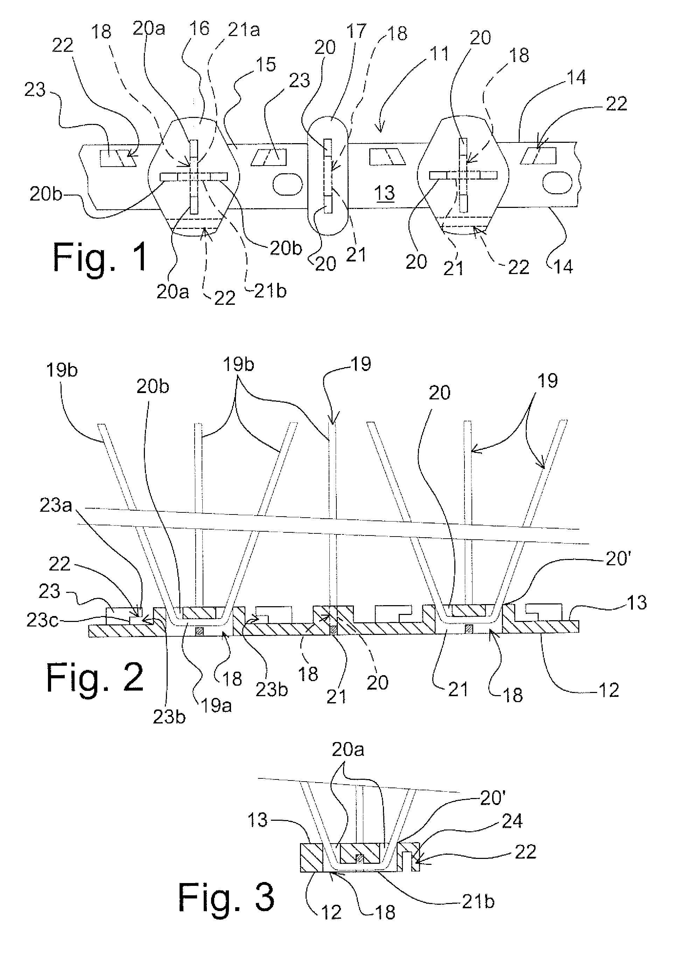

With reference to figures 1 to 5, a device for deterring birds from stopping on surfaces according to the invention, comprises an elongated board 11 with two opposite main faces, respectively a lower face 12 and a top face 13, and longitudinal sides 14. As in the prior art, the lower face 12 is to be fixed, for example by means of glue or screws, on a surface of the structure where it is desired to prevent birds from stopping. The lower face may be an actual wall or an imaginary flat surface defined by two or more base elements.

The board 11 is composed of a main elongated portion 15 from which first enlarged portions 16 and second enlarged portions 17 project sideways and upwards (reference is made to the bottom-top direction previously defined by the terms "lower" and "top" used for the main faces), alternating with each other along the longitudinal direction of the board. The first enlarged portions 16 preferably have a shape similar to a rounded diamond, while the second enlarged portions 17 are preferably simply rod shaped.

On such first and second enlarged portions 16 and 17, first locking seats 18 are defined for wire-shaped deterring elements 19 projecting from the board 11.

Each first locking seat 18 comprises a spaced pair of through holes 20 communicating the lower and top faces 12 and 13 with each other, and a groove 21 formed in the lower face 12 and joining the respective through holes 20; the depth of the groove 21 is greater than the width of the wire forming the deterring elements 19.

In particular, at the first enlarged portions 16, two pairs of through holes are arranged along respective axis mutually crossing, respectively a first pair of holes 20a aligned on an axis transversal to the direction of elongation of the main portion 15 of the board, and a second pair of holes 20b aligned with said direction. As shown in figure 2 and figure 3, the groove 21b of the second pair of holes 20b is defined with greater depth than the groove 21a of the first pair 20a.

The wire-shaped deterring elements 19 consist each of a thin round-sectioned metal wire, folded on a plane, substantially according to a V. Each element 19 then comprises a central segment 19a, and two end segments 19b which symmetrically develop from the central segment 19a, delimiting a concave space.

The wire-shaped deterring elements 19 are coupled with the first locking seats 18 by elastically bending the end segments 19b towards each other and inserting them from below inside the through holes of respective pairs 20, 20a, 20b, until the central segments 19a abut on the bottom of respective grooves 21, 21a, 21b.

Once the free ends of the end segments 19b have gone beyond the top edges 20' of the holes 20 in which they are inserted, the same segments 19b become progressively free to elastically regain their widened configuration, thus producing a thrust which assists the approaching of the central segments 19a to the bottom of the respective grooves 21, 21a and 21b.

It is to be noted how the wire-shaped deterring elements 19 engaged with the first locking seats 18 lie on planes that are perpendicular to the top face 13 of the board; namely, the wire-shaped deterring elements 19 associated with the pairs 20a lie on planes parallel to each other and orthogonal to the direction of elongation of the main portion 15.

According to the invention, second locking seats 22 for wire-shaped deterring elements 19 are formed in the board 11, the shape and orientation of the second seats being such that when elements 19 are inserted therein, the end sections 19b point sideways from the board. In particular, in the preferred embodiment, the wire-shaped elements 19 which are inserted in the locking seats 22 are lying on a plane substantially parallel to the lower and top faces 12 and 13 of the board 11, that is to say a plane orthogonal to the planes on which the wire-shaped deterring elements lie when engaged with the first locking seats 18.

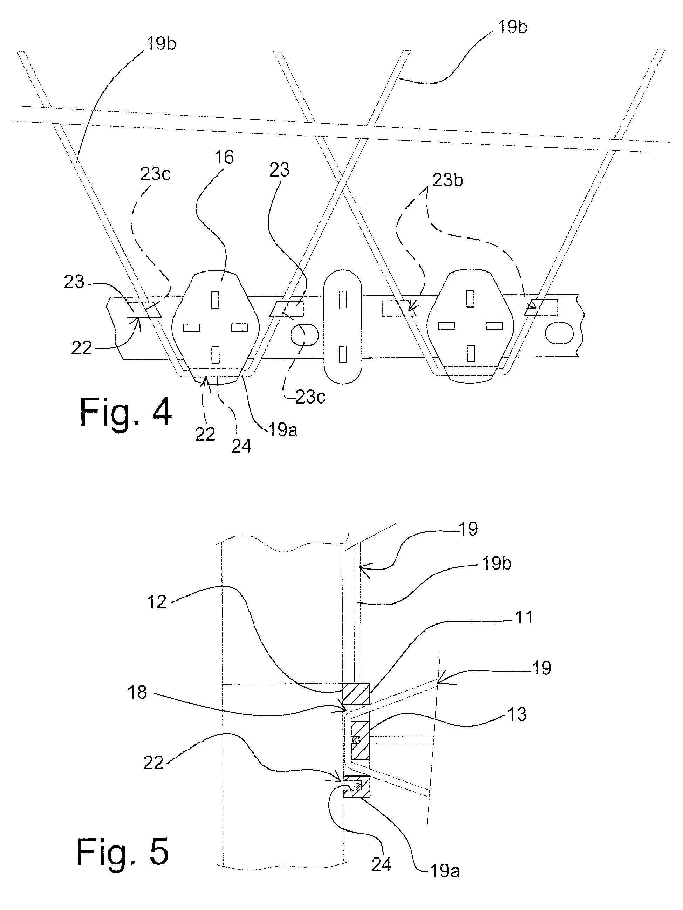

In this embodiment (see namely figures 4 and 5), each second locking seat 22 comprises two side-locking protrusions 23 for the end sections 19b, and an abutment 24 engaging with the central segment 19a for preventing the displacement of the element 19 in the direction opposite to the direction of insertion.

In particular, for each second locking seat 22 the side-locking protrusions 23 project from the top face 13 of the board 11 and are arranged mutually opposite with respect to a symmetry plane transverse to the direction of elongation of the board and passing through the center of a second enlarged portion 17. The side locking protrusions 23 (see in particular figure 2) comprise lips 23a on their top part defining, in cooperation with the top face 13 of the board, C-shaped slots 23b facing each other, in which opposite end segments 19b of a same wire-shaped deterring element 19 are inserted. The slots 23 comprise a face 23c for the abutment of the element 19, having a slope that matches the slant of the end segments 19b.

The central locking abutment engaging with the central segment 19a consists in turn of a C-shaped slot 24, formed in the sideways protruding part of a second enlarged portion 17.

The insertion of the wire-shaped deterring elements in the second locking seats 22 occurs by bending the end segments 19b towards each other and accommodating them in the C-shaped slots 23b. Once the central segment 19a approaches the second enlarged portion 17, the former, while continuing its advancement, is thrust downwards, so as to let them snap and lock within the slots 24.

In this embodiment, the end segments 19b are in contact with the top face 13 of the board 11.

In figures from 6 to 9, a variant of the board 11 is shown, in which different second locking seats 122 are present which comprise the same slot 24 described above and side-locking arrangements 123 consisting of channels 123a formed transversely in the lower face 12 of the board 11, and oriented in accordance with the slope of the end segments 19b. Such channels 123a extend passing through the longitudinal sides 14 and have greater internal width with respect to the diameter of the end segments 19b. However, the downwards opening 123b of the same channels 123a has a reduced width, so as to hold the elements 19 locked in the channels. The end sections 19b can be forcibly pushed inside the channels 19b through the opening 123b, or slidably inserted through the end openings of the channels 123a on the longitudinal sides 14, indicated at 123c.

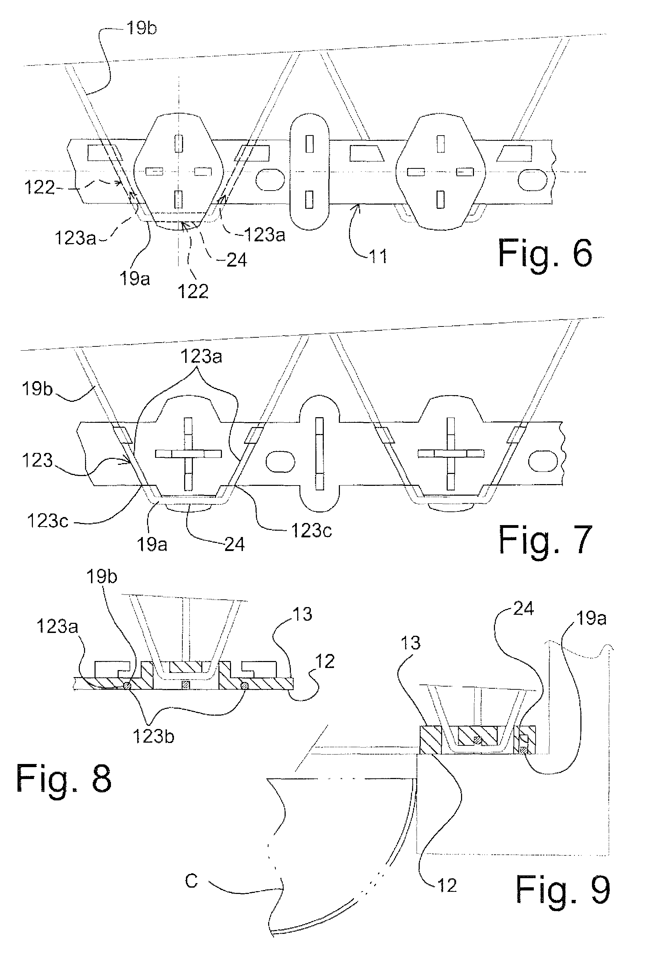

As can be clearly inferred from the description of the above examples, the device according to the invention attains the pre-determined objects. In fact, by using one same board, it is possible to arrange the deterring elements in a manner such that they point in a direction meeting the surface on which the board is fixed (considering the tilt caused by the slope of the V-shaped elements), and/or also in a direction substantially parallel to the surface on which the board is fixed. Such two arrangements permit to use the device respectively on cornices or generally wide surfaces, and at the top edges of hinged frames, frames in general etc. It has to be noted that the device can be used in the configuration shown in figures 5, 8 and 9, with the deterring elements arranged both in the first locking seats and in the second seats, thus obtaining end segments which extend parallel to the fixing surface of the board and orthogonally thereto. In figure 9 a device fixed near the edge of a gutter C is shown. In this case, the needle-like end segments parallel to the surface to which the board is fixed, are cantilevered towards the centre of the gutter, completely blocking the access to the birds and thus preventing nest-building, while the pointing upwards of the other needle-like end sections prevent the stopping of the same birds on the edge of the gutter.

The installation of the device is very simple. In particular, the insertion of the wire-shaped deterring elements in the respective locking seats is, as explained, remarkably quick and easy.

Numerous modifications and changes can be brought to the device according to the invention, all falling within the scope thereof as defined in the attached claims; moreover, all details can be substituted with other technically equivalent elements, without departing from the said scope.

In practice, the materials used, as long as they are compatible with the specific use, as well as the sizes, can be of any type according to the requirements and the known techniques.

Where the characteristics and techniques mentioned in any claim are followed by reference numerals, these were enclosed as an example, with the sole object of increasing the comprehension of the claims; consequently, they have no limiting effect on the interpretation of each element which they identify.

## Claims

1. A device for deterring birds from stopping on surfaces, comprising:
- a board (11) elongated in a direction, comprising longitudinal sides (14) delimiting a lower face (12) to be fixed to a surface on which it is desired to prevent birds from stopping;
- one or more wire-shaped deterring elements (19);
- a number of first locking seats (18) defined on said board (11) for respective deterring elements, said first locking seats (18) being such that the deterring elements locked therewith point in directions meeting said lower face (12);
**characterised in that** it further comprises a number of second locking seats (22, 122) for respective wire-shaped elements (19), said second locking seats being such that the deterring elements (19) engaged therewith project and point from said longitudinal sides according to directions substantially parallel to said lower face (12).

2. The device according to claim 1, wherein each wire-shaped element (19) comprises two end segments (19b) and a central segment (19a) from which said end segments (19b) develop according to a V-shaped fashion.

3. The device according to claim 2, wherein said first locking seats (18) are such that the deterring elements (19) engaged therewith point their end sections (19b) on a plane orthogonal to said lower face (12) of the board (11).

4. The device according to claim 2 or 3, wherein each of said second locking seats (22, 122) comprise two side-locking arrangements (23, 123) for locking said end segments (19b) and an abutment (24) for locking said central section (19a).

5. The device according to claim 4, wherein said side locking arrangements (23) comprise protrusions (23) projecting from a top face (13) of said board (11) opposite to said lower face (12), said protrusions (23) defining, in cooperation with said top face (13), C-shaped slots (23b) facing each other, for accommodating opposite end segments (19b) of a same wire-shaped deterring element (19), said central abutment (24) comprising in turn a C-shaped slot (24) for accommodating said central section (19a).

6. The device according to claim 5, wherein said side locking protrusions (23) comprise lips (23a) on their top part defining said C-shaped slots (23b), the same slots comprising a face (23c) for the abutment of the elements (19), having a slope that matches the slant of the end segments (19b).

7. The device according to claim 4, wherein said side locking arrangements (23) comprise channels (123a) formed in said lower face (12) of the board (11), passing through said longitudinal sides (14) and oriented in accordance with the slope of said end segments (19b), said central abutment (24) comprising in turn a C-shaped slot (24) for accommodating said central section (19a).

8. The device according to claim 7, wherein said channels (123a) having a downwards opening (123b) on the lower face (12) of the board (11) having a reduced width, so as to hold the elements (19) locked in the channels.

9. The device according to any of the claims 5, 6, 7 or 8, wherein said wire-shaped deterring elements (19) are formed of a round-sectioned metal bar, substantially V-folded according to a planar extension, said C-shaped slot (24) for accommodating said central section (19a) being parallel to the longitudinal extension of the board (11).

10. The device according to any of the previous claims, wherein said board (11) comprises a main elongated portion (15), first enlarged portions (16) and second enlarged portions (17) projecting sideways and upwards from said main elongated portion, such enlarged portions (16) and (17) alternating with each other along the longitudinal direction of the board, said first locking seats (18) being formed in said first and second enlarged portions (16, 17), each of said first locking seat (18) comprising a spaced pair of through holes (20) communicating the lower and top faces (12) and (13) with each other, and a groove (21) formed in said lower face (12) and joining the respective through holes (20), the depth of the groove (21) being greater than the width of the wire of the deterring elements (19).

11. The device according to claim 10, wherein at each of the first enlarged portions (16), two pairs of through holes (20a, 20b) are arranged along respective axis mutually crossing, respectively a first pair of holes (20a) aligned on an axis transversal to the direction of elongation of said main portion (15) of the board, and a second pair of holes (20b) aligned with said direction, while, at each second enlarged portion (17), a pair of through holes (20) is arranged transversely to the direction of elongation of said main elongated portion (15).

12. The device according to claim 10 or 11, wherein said first enlarged portions (16) have a shape similar to a rounded diamond, while said second enlarged portions (17) are simply rod shaped.

13. A base board for a bird deterring device according to any of the previous claims.
